# EUROPEAN PATENT APPLICATION

(11) **EP 3 739 451 A1**
(43) Date of publication of application: **18.11.2020**
(21) Application number: 20173217.9
(22) Date of filing: 06.05.2020
(51) Int. Cl.: G06F 9/50, G06F 9/54, H04L 12/24

(54) **DETECT AND ENFORCE API SLAS USING CLOUD ACCESS API BROKER**

(30) Priority: 17.05.2019 US 201916415850
(71) Applicant: Citrix Systems Inc., Fort Lauderdale, FL 33309 (US)
(72) Inventor: CHAUHAN, Abhishek A, Santa Clara, CA California 95054 (US); WHITE, Jeremy, Santa Clara, CA California 95054 (US)
(74) Representative: Murgitroyd & Company

(57) **Abstract**

Described embodiments provide systems and methods for monitoring service level compliance of an entity's use of application programming interfaces of a service. A device can identify a service level definition for a service used by an entity. The service can include a plurality of application programming interfaces (APIs). The service level definition can include one or more thresholds regarding use by the entity of the plurality of APIs. The device can receive, from one or more devices of the entity, a plurality of requests to access one or more APIs of the plurality of APIs of the service. The device can record information about the entity's use of the plurality of APIs of the service. The device can compare the recorded information to the one or more thresholds of the service level definition.

## Description

### CROSS-REFERENCE TO RELATED APPLICATION

The present application claims priority to U.S. Patent Application No. 16/415,850, filed on May 17, 2019, and titled "DETECT AND ENFORCE API SLAS USING CLOUD ACCESS API BROKER". The entire contents of which are hereby incorporated by reference in entirety.

### FIELD OF THE DISCLOSURE

The present application generally relates to monitoring use of a service, including but not limited to systems and methods for monitoring application programming interfaces for service level agreement (SLA).

### BACKGROUND

An organization or a user may access a service over a network, which can include a service provided by an application hosted on the cloud for instance. The service may provide for or guarantee that use of the service by the organization or user can meet certain service level(s). In some cases, the service level(s) are negotiated by the organization or user with the service. In other cases, the organization or user may purchase or contract for certain service level(s).

### SUMMARY

This Summary is provided to introduce a selection of concepts in a simplified form that are further described below in the Detailed Description. This Summary is not intended to identify key features or essential features, nor is it intended to limit the scope of the claims included herewith.

The present disclosure is directed towards systems and methods for monitoring service level(s) of a service, in connection with a SLA for instance. The provider of the service (sometimes referred to as a service provider) may not actively monitor for adherence to a SLA, and/or may not actively enforce the SLA. An organization, user or other entity using the service can monitor the corresponding service level(s) via an application programming interface (API) monitor (sometimes referred to as an API broker) that receives, handles, intercepts and/or processes requests in connection with the service. The API monitor can monitor or track usage, quality, disruptions and/or other statistics of the service, which can be indicative of actual service level(s). The API monitor can compare the statistics against predefined thresholds to identify instances or evidence of the SLA being breached or not met. In response to identifying such instances or evidence, the API monitor can generate and/or transmit a notification or report to the entity and/or service provider (e.g., for action to improve service level(s), and/or for compensation).

In one aspect, the present disclosure is directed to a method for monitoring service level compliance of an entity's use of application programming interfaces of a service. The method can include identifying, by a device, a service level definition for a service used by an entity. The service may include a plurality of application programming interfaces (APIs). The service level definition may include one or more thresholds regarding use by the entity of the plurality of APIs. The device may receive, from one or more devices of the entity, a plurality of requests to access one or more APIs of the plurality of APIs of the service. The device may record information about the entity's use of the plurality of APIs of the service. The device can compare the recorded information about the entity's use of the plurality of APIs of the service to the one or more thresholds of the service level definition. The device can determine that the entity's use of the plurality of APIs is within a predetermined range of a threshold of the one or more thresholds of the service level definition. The device may provide notification of the determination.

In some embodiments, the device identifies the service level definition based on an identifier of the entity and an identifier of the service. The device may configure one or more policies based at least on the service level definition. The device may obtain the service level definition from a third party providing the service on a remote server. The service can be hosted on a remote server of a third party. The device can record information comprising one or more of the following: a number of requests per time period, a number of requests that succeed per time period, a number of requests that fail per time period, a response time per request.

In certain embodiments, the predetermined range of the threshold comprises a percentage of the threshold. The service may include a plurality of micro services and one or more APIs of the plurality of APIs correspond to one of the plurality of micro services. A threshold of the one or more thresholds can correspond to a micro service of the plurality of micro services. The device can throttle, responsive to the determination, one or more subsequent requests to one or more APIs of the plurality of APIs.

In one aspect, the present disclosure is directed to a system for monitoring service level compliance of an entity's use of application programming interfaces of a service. The system can include a device comprising one or more processors, coupled to memory and configured to identify a service level definition for a service used by an entity. The service may include a plurality of application programming interfaces (APIs). The service level definition may include one or more thresholds regarding use by the entity of the plurality of APIs. The device can receive from one or more devices of the entity a plurality of requests to access one or more APIs of the plurality of APIs of the service. The device can record information about the entity's use of the plurality of APIs of the service. The device can compare the recorded information about the entity's use of the plurality of APIs of the service to the one or more thresholds of the service level definition. The device can determine that the entity's use of the plurality of APIs is within a predetermined range of a threshold of the one or more thresholds of the service level definition. The device can provide a notification of the determination.

In some embodiments, the device can identify the service level definition based on an identifier of the entity and an identifier of the service. The device can configure one or more policies based at least on the service level definition. The device can obtain the service level definition from a third party providing the service on a remote server. In some embodiments, the service is hosted on a remote server of a third party. The recorded information can include one or more of the following: a number of requests per time period, a number of requests that succeed per time period, a number of requests that fail per time period, a response time per request. The predetermined range of the threshold can include a percentage of the threshold. The service can include a plurality of micro services, and one or more APIs of the plurality of APIs can correspond to one of the plurality of micro services. A threshold of the one or more thresholds can correspond to a micro service of the plurality of micro services. The device can throttle, responsive to the determination, one or more subsequent requests to one or more APIs of the plurality of APIs.

### BRIEF DESCRIPTION OF THE DRAWING FIGURES

Objects, aspects, features, and advantages of embodiments disclosed herein will become more fully apparent from the following detailed description, the appended claims, and the accompanying drawing figures in which like reference numerals identify similar or identical elements. Reference numerals that are introduced in the specification in association with a drawing figure may be repeated in one or more subsequent figures without additional description in the specification in order to provide context for other features, and not every element may be labeled in every figure. The drawing figures are not necessarily to scale, emphasis instead being placed upon illustrating embodiments, principles and concepts. The drawings are not intended to limit the scope of the claims included herewith.
FIG. 1A is a block diagram of a network computing system, in accordance with an illustrative embodiment;
FIG. 1B is a block diagram of a network computing system for delivering a computing environment from a server to a client via an appliance, in accordance with an illustrative embodiment;
FIG. 1C is a block diagram of a computing device, in accordance with an illustrative embodiment;
FIG. 2 is a block diagram of an appliance for processing communications between a client and a server, in accordance with an illustrative embodiment;
FIG. 3 is a block diagram of a virtualization environment, in accordance with an illustrative embodiment;
FIG. 4 is a block diagram of a cluster system, in accordance with an illustrative embodiment;
FIG. 5A is a block diagram of a service graph based system, in accordance with an illustrative embodiment;
FIG. 5B is a block diagram of a service graph, in accordance with an illustrative embodiment;
FIG. 5C is a flow diagram of a method of using a service graph, in accordance with an illustrative embodiment;
FIG. 6 is a block diagram of an example system for monitoring API SLAs, in accordance with an illustrative embodiment;
FIG. 7 is a flow diagram of an example method for monitoring API SLAs, in accordance with an illustrative embodiment;

### DETAILED DESCRIPTION

For purposes of reading the description of the various embodiments below, the following descriptions of the sections of the specification and their respective contents may be helpful:

Section A describes a network environment and computing environment which may be useful for practicing embodiments described herein;

Section B describes embodiments of systems and methods for delivering a computing environment to a remote user;

Section C describes embodiments of systems and methods for virtualizing an application delivery controller;

Section D describes embodiments of systems and methods for providing a clustered appliance architecture environment;

Section E describes embodiments of systems and methods of a Service Graph Based Platform and Technology; and

Section F describes embodiments of systems and methods for monitoring API SLAs.

### A. Network and Computing Environment

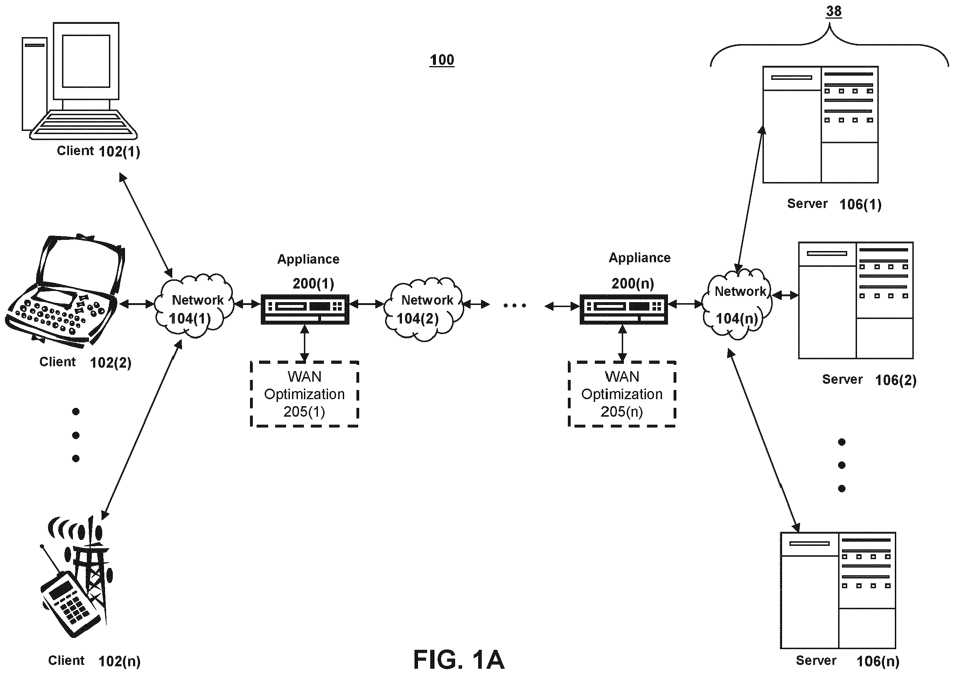

Referring to FIG. 1A, an illustrative network environment 100 is depicted. Network environment 100 may include one or more clients 102(1)-102(n) (also generally referred to as local machine(s) 102 or client(s) 102) in communication with one or more servers 106(1)-106(n) (also generally referred to as remote machine(s) 106 or server(s) 106) via one or more networks 104(1)-104n (generally referred to as network(s) 104). In some embodiments, a client 102 may communicate with a server 106 via one or more appliances 200(1)-200n (generally referred to as appliance(s) 200 or gateway(s) 200).

Although the embodiment shown in FIG. 1A shows one or more networks 104 between clients 102 and servers 106, in other embodiments, clients 102 and servers 106 may be on the same network 104. The various networks 104 may be the same type of network or different types of networks. For example, in some embodiments, network 104(1) may be a private network such as a local area network (LAN) or a company Intranet, while network 104(2) and/or network 104(n) may be a public network, such as a wide area network (WAN) or the Internet. In other embodiments, both network 104(1) and network 104(n) may be private networks. Networks 104 may employ one or more types of physical networks and/or network topologies, such as wired and/or wireless networks, and may employ one or more communication transport protocols, such as transmission control protocol (TCP), internet protocol (IP), user datagram protocol (UDP) or other similar protocols.

As shown in FIG. 1A, one or more appliances 200 may be located at various points or in various communication paths of network environment 100. For example, appliance 200 may be deployed between two networks 104(1) and 104(2), and appliances 200 may communicate with one another to work in conjunction to, for example, accelerate network traffic between clients 102 and servers 106. In other embodiments, the appliance 200 may be located on a network 104. For example, appliance 200 may be implemented as part of one of clients 102 and/or servers 106. In an embodiment, appliance 200 may be implemented as a network device such as Citrix networking (formerly NetScaler®) products sold by Citrix Systems, Inc. of Fort Lauderdale, FL.

As shown in FIG. 1A, one or more servers 106 may operate as a server farm 38. Servers 106 of server farm 38 may be logically grouped, and may either be geographically co-located (e.g., on premises) or geographically dispersed (e.g., cloud based) from clients 102 and/or other servers 106. In an embodiment, server farm 38 executes one or more applications on behalf of one or more of clients 102 (e.g., as an application server), although other uses are possible, such as a file server, gateway server, proxy server, or other similar server uses. Clients 102 may seek access to hosted applications on servers 106.

As shown in FIG. 1A, in some embodiments, appliances 200 may include, be replaced by, or be in communication with, one or more additional appliances, such as WAN optimization appliances 205(1)-205(n), referred to generally as WAN optimization appliance(s) 205. For example, WAN optimization appliance 205 may accelerate, cache, compress or otherwise optimize or improve performance, operation, flow control, or quality of service of network traffic, such as traffic to and/or from a WAN connection, such as optimizing Wide Area File Services (WAFS), accelerating Server Message Block (SMB) or Common Internet File System (CIFS). In some embodiments, appliance 205 may be a performance enhancing proxy or a WAN optimization controller. In one embodiment, appliance 205 may be implemented as Citrix SD-WAN products sold by Citrix Systems, Inc. of Fort Lauderdale, FL.

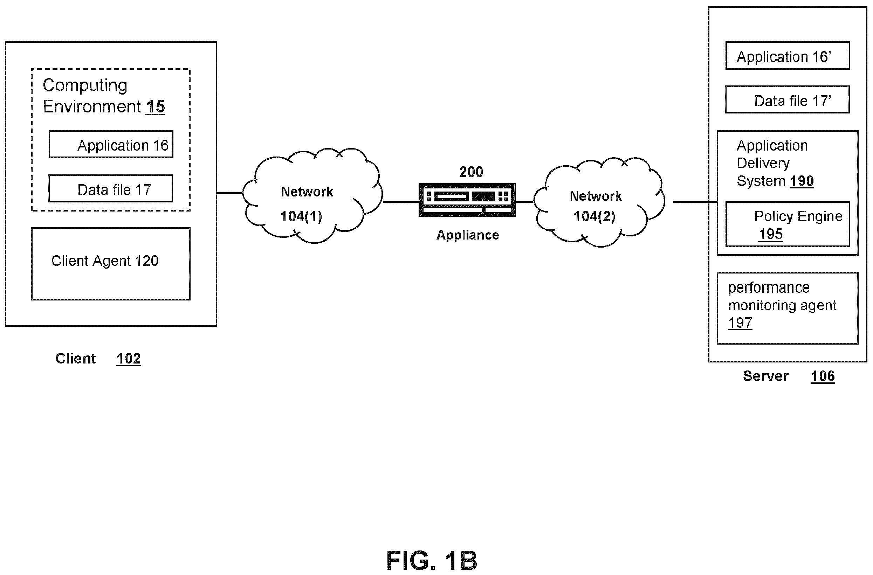

Referring to FIG. 1B, an example network environment, 100', for delivering and/or operating a computing network environment on a client 102 is shown. As shown in FIG. 1B, a server 106 may include an application delivery system 190 for delivering a computing environment, application, and/or data files to one or more clients 102. Client 102 may include client agent 120 and computing environment 15. Computing environment 15 may execute or operate an application, 16, that accesses, processes or uses a data file 17. Computing environment 15, application 16 and/or data file 17 may be delivered via appliance 200 and/or the server 106.

Appliance 200 may accelerate delivery of all or a portion of computing environment 15 to a client 102, for example by the application delivery system 190. For example, appliance 200 may accelerate delivery of a streaming application and data file processable by the application from a data center to a remote user location by accelerating transport layer traffic between a client 102 and a server 106. Such acceleration may be provided by one or more techniques, such as: 1) transport layer connection pooling, 2) transport layer connection multiplexing, 3) transport control protocol buffering, 4) compression, 5) caching, or other techniques. Appliance 200 may also provide load balancing of servers 106 to process requests from clients 102, act as a proxy or access server to provide access to the one or more servers 106, provide security and/or act as a firewall between a client 102 and a server 106, provide Domain Name Service (DNS) resolution, provide one or more virtual servers or virtual internet protocol servers, and/or provide a secure virtual private network (VPN) connection from a client 102 to a server 106, such as a secure socket layer (SSL) VPN connection and/or provide encryption and decryption operations.

Application delivery management system 190 may deliver computing environment 15 to a user (e.g., client 102), remote or otherwise, based on authentication and authorization policies applied by policy engine 195. A remote user may obtain a computing environment and access to server stored applications and data files from any network-connected device (e.g., client 102). For example, appliance 200 may request an application and data file from server 106. In response to the request, application delivery system 190 and/or server 106 may deliver the application and data file to client 102, for example via an application stream to operate in computing environment 15 on client 102, or via a remote-display protocol or otherwise via remote-based or server-based computing. In an embodiment, application delivery system 190 may be implemented as any portion of the Citrix Workspace Suite™ by Citrix Systems, Inc., such as Citrix Virtual Apps and Desktops (formerly XenApp® and XenDesktop®).

Policy engine 195 may control and manage the access to, and execution and delivery of, applications. For example, policy engine 195 may determine the one or more applications a user or client 102 may access and/or how the application should be delivered to the user or client 102, such as a server-based computing, streaming or delivering the application locally to the client 120 for local execution.

For example, in operation, a client 102 may request execution of an application (e.g., application 16') and application delivery system 190 of server 106 determines how to execute application 16', for example based upon credentials received from client 102 and a user policy applied by policy engine 195 associated with the credentials. For example, application delivery system 190 may enable client 102 to receive application-output data generated by execution of the application on a server 106, may enable client 102 to execute the application locally after receiving the application from server 106, or may stream the application via network 104 to client 102. For example, in some embodiments, the application may be a server-based or a remote-based application executed on server 106 on behalf of client 102. Server 106 may display output to client 102 using a thin-client or remote-display protocol, such as the Independent Computing Architecture (ICA) protocol by Citrix Systems, Inc. of Fort Lauderdale, FL. The application may be any application related to real-time data communications, such as applications for streaming graphics, streaming video and/or audio or other data, delivery of remote desktops or workspaces or hosted services or applications, for example infrastructure as a service (IaaS), desktop as a service

(DaaS), workspace as a service (WaaS), software as a service (SaaS) or platform as a service (PaaS).

One or more of servers 106 may include a performance monitoring service or agent 197. In some embodiments, a dedicated one or more servers 106 may be employed to perform performance monitoring. Performance monitoring may be performed using data collection, aggregation, analysis, management and reporting, for example by software, hardware or a combination thereof. Performance monitoring may include one or more agents for performing monitoring, measurement and data collection activities on clients 102 (e.g., client agent 120), servers 106 (e.g., agent 197) or an appliance 200 and/or 205 (agent not shown). In general, monitoring agents (e.g., 120 and/or 197) execute transparently (e.g., in the background) to any application and/or user of the device. In some embodiments, monitoring agent 197 includes any of the product embodiments referred to as Citrix Analytics or Citrix Application Delivery Management by Citrix Systems, Inc. of Fort Lauderdale, FL.

The monitoring agents 120 and 197 may monitor, measure, collect, and/or analyze data on a predetermined frequency, based upon an occurrence of given event(s), or in real time during operation of network environment 100. The monitoring agents may monitor resource consumption and/or performance of hardware, software, and/or communications resources of clients 102, networks 104, appliances 200 and/or 205, and/or servers 106. For example, network connections such as a transport layer connection, network latency, bandwidth utilization, end-user response times, application usage and performance, session connections to an application, cache usage, memory usage, processor usage, storage usage, database transactions, client and/or server utilization, active users, duration of user activity, application crashes, errors, or hangs, the time required to log-in to an application, a server, or the application delivery system, and/or other performance conditions and metrics may be monitored.

The monitoring agents 120 and 197 may provide application performance management for application delivery system 190. For example, based upon one or more monitored performance conditions or metrics, application delivery system 190 may be dynamically adjusted, for example periodically or in real-time, to optimize application delivery by servers 106 to clients 102 based upon network environment performance and conditions.

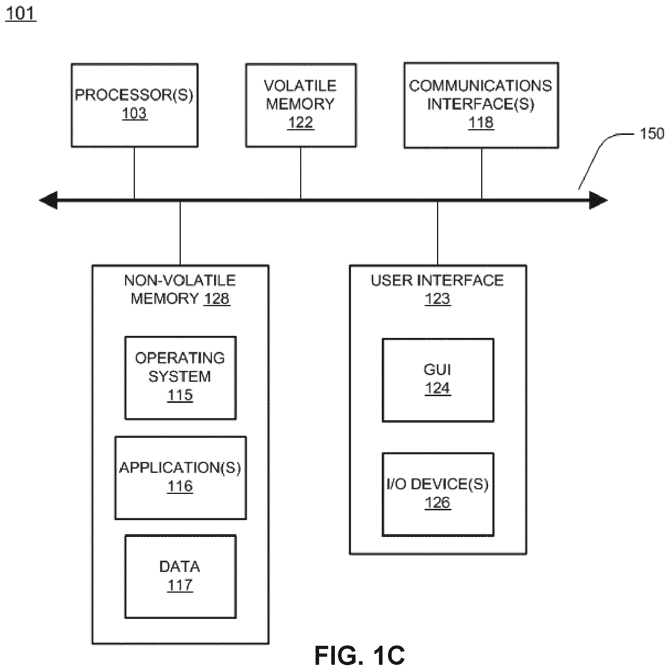

In described embodiments, clients 102, servers 106, and appliances 200 and 205 may be deployed as and/or executed on any type and form of computing device, such as any desktop computer, laptop computer, or mobile device capable of communication over at least one network and performing the operations described herein. For example, clients 102, servers 106 and/or appliances 200 and 205 may each correspond to one computer, a plurality of computers, or a network of distributed computers such as computer 101 shown in FIG. 1C.

As shown in FIG. 1C, computer 101 may include one or more processors 103, volatile memory 122 (e.g., RAM), non-volatile memory 128 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 123, one or more communications interfaces 118, and communication bus 150. User interface 123 may include graphical user interface (GUI) 124 (e.g., a touchscreen, a display, etc.) and one or more input/output (I/O) devices 126 (e.g., a mouse, a keyboard, etc.). Non-volatile memory 128 stores operating system 115, one or more applications 116, and data 117 such that, for example, computer instructions of operating system 115 and/or applications 116 are executed by processor(s) 103 out of volatile memory 122. Data may be entered using an input device of GUI 124 or received from I/O device(s) 126. Various elements of computer 101 may communicate via communication bus 150. Computer 101 as shown in FIG. 1C is shown merely as an example, as clients 102, servers 106 and/or appliances 200 and 205 may be implemented by any computing or processing environment and with any type of machine or set of machines that may have suitable hardware and/or software capable of operating as described herein.

Processor(s) 103 may be implemented by one or more programmable processors executing one or more computer programs to perform the functions of the system. As used herein, the term "processor" describes an electronic circuit that performs a function, an operation, or a sequence of operations. The function, operation, or sequence of operations may be hard coded into the electronic circuit or soft coded by way of instructions held in a memory device. A "processor" may perform the function, operation, or sequence of operations using digital values or using analog signals. In some embodiments, the "processor" can be embodied in one or more application specific integrated circuits (ASICs), microprocessors, digital signal processors, microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors.

Communications interfaces 118 may include one or more interfaces to enable computer 101 to access a computer network such as a LAN, a WAN, or the Internet through a variety of wired and/or wireless or cellular connections.

In described embodiments, a first computing device 101 may execute an application on behalf of a user of a client computing device (e.g., a client 102), may execute a virtual machine, which provides an execution session within which applications execute on behalf of a user or a client computing device (e.g., a client 102), such as a hosted desktop session, may execute a terminal services session to provide a hosted desktop environment, or may provide access to a computing environment including one or more of: one or more applications, one or more desktop applications, and one or more desktop sessions in which one or more applications may execute.

### B. Appliance Architecture

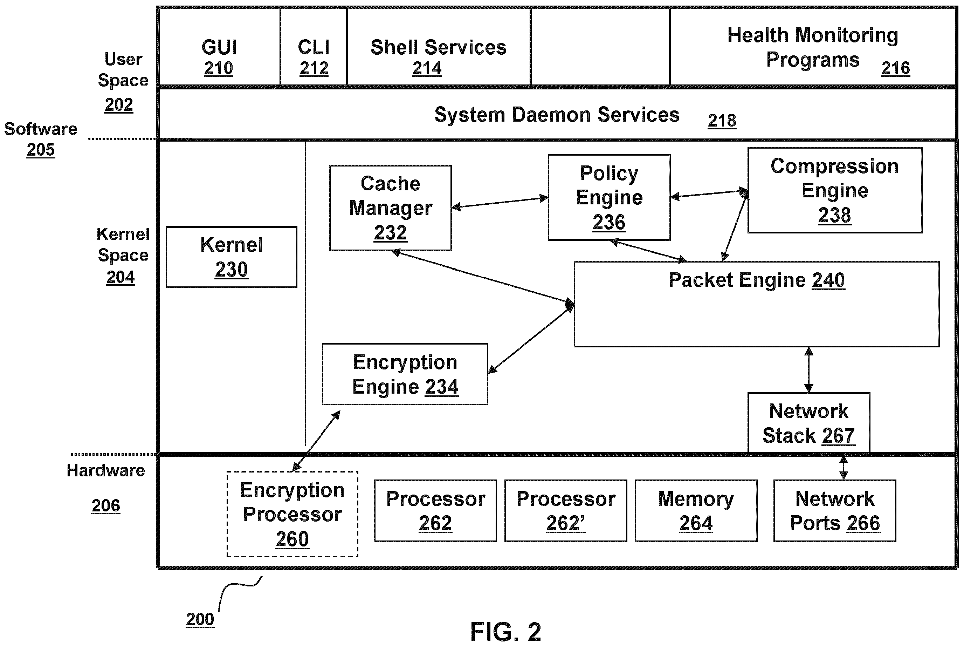

FIG. 2 shows an example embodiment of appliance 200. As described herein, appliance 200 may be implemented as a server, gateway, router, switch, bridge or other type of computing or network device. As shown in FIG. 2, an embodiment of appliance 200 may include a hardware layer 206 and a software layer 205 divided into a user space 202 and a kernel space 204. Hardware layer 206 provides the hardware elements upon which programs and services within kernel space 204 and user space 202 are executed and allow programs and services within kernel space 204 and user space 202 to communicate data both internally and externally with respect to appliance 200. As shown in FIG. 2, hardware layer 206 may include one or more processing units 262 for executing software programs and services, memory 264 for storing software and data, network ports 266 for transmitting and receiving data over a network, and encryption processor 260 for encrypting and decrypting data such as in relation to Secure Socket Layer (SSL) or Transport Layer Security (TLS) processing of data transmitted and received over the network.

An operating system of appliance 200 allocates, manages, or otherwise segregates the available system memory into kernel space 204 and user space 202. Kernel space 204 is reserved for running kernel 230, including any device drivers, kernel extensions or other kernel related software. As known to those skilled in the art, kernel 230 is the core of the operating system, and provides access, control, and management of resources and hardware-related elements of application 104. Kernel space 204 may also include a number of network services or processes working in conjunction with cache manager 232.

Appliance 200 may include one or more network stacks 267, such as a TCP/IP based stack, for communicating with client(s) 102, server(s) 106, network(s) 104, and/or other appliances 200 or 205. For example, appliance 200 may establish and/or terminate one or more transport layer connections between clients 102 and servers 106. Each network stack 267 may include a buffer 243 for queuing one or more network packets for transmission by appliance 200.

Kernel space 204 may include cache manager 232, packet engine 240, encryption engine 234, policy engine 236 and compression engine 238. In other words, one or more of processes 232, 240, 234, 236 and 238 run in the core address space of the operating system of appliance 200, which may reduce the number of data transactions to and from the memory and/or context switches between kernel mode and user mode, for example since data obtained in kernel mode may not need to be passed or copied to a user process, thread or user level data structure.

Cache manager 232 may duplicate original data stored elsewhere or data previously computed, generated or transmitted to reducing the access time of the data. In some embodiments, the cache memory may be a data object in memory 264 of appliance 200, or may be a physical memory having a faster access time than memory 264.

Policy engine 236 may include a statistical engine or other configuration mechanism to allow a user to identify, specify, define or configure a caching policy and access, control and management of objects, data or content being cached by appliance 200, and define or configure security, network traffic, network access, compression or other functions performed by appliance 200.

Encryption engine 234 may process any security related protocol, such as SSL or TLS. For example, encryption engine 234 may encrypt and decrypt network packets, or any portion thereof, communicated via appliance 200, may setup or establish SSL, TLS or other secure connections, for example between client 102, server 106, and/or other appliances 200 or 205. In some embodiments, encryption engine 234 may use a tunneling protocol to provide a VPN between a client 102 and a server 106. In some embodiments, encryption engine 234 is in communication with encryption processor 260. Compression engine 238 compresses network packets bi-directionally between clients 102 and servers 106 and/or between one or more appliances 200.

Packet engine 240 may manage kernel-level processing of packets received and transmitted by appliance 200 via network stacks 267 to send and receive network packets via network ports 266. Packet engine 240 may operate in conjunction with encryption engine 234, cache manager 232, policy engine 236 and compression engine 238, for example to perform encryption/decryption, traffic management such as request-level content switching and request-level cache redirection, and compression and decompression of data.

User space 202 is a memory area or portion of the operating system used by user mode applications or programs otherwise running in user mode. A user mode application may not access kernel space 204 directly and uses service calls in order to access kernel services. User space 202 may include graphical user interface (GUI) 210, a command line interface (CLI) 212, shell services 214, health monitor 216, and daemon services 218. GUI 210 and CLI 212 enable a system administrator or other user to interact with and control the operation of appliance 200, such as via the operating system of appliance 200. Shell services 214 include the programs, services, tasks, processes or executable instructions to support interaction with appliance 200 by a user via the GUI 210 and/or CLI 212.

Health monitor 216 monitors, checks, reports and ensures that network systems are functioning properly and that users are receiving requested content over a network, for example by monitoring activity of appliance 200. In some embodiments, health monitor 216 intercepts and inspects any network traffic passed via appliance 200. For example, health monitor 216 may interface with one or more of encryption engine 234, cache manager 232, policy engine 236, compression engine 238, packet engine 240, daemon services 218, and shell services 214 to determine a state, status, operating condition, or health of any portion of the appliance 200. Further, health monitor 216 may determine if a program, process, service or task is active and currently running, check status, error or history logs provided by any program, process, service or task to determine any condition, status or error with any portion of appliance 200. Additionally, health monitor 216 may measure and monitor the performance of any application, program, process, service, task or thread executing on appliance 200.

Daemon services 218 are programs that run continuously or in the background and handle periodic service requests received by appliance 200. In some embodiments, a daemon service may forward the requests to other programs or processes, such as another daemon service 218 as appropriate.

As described herein, appliance 200 may relieve servers 106 of much of the processing load caused by repeatedly opening and closing transport layer connections to clients 102 by opening one or more transport layer connections with each server 106 and maintaining these connections to allow repeated data accesses by clients via the Internet (e.g., "connection pooling"). To perform connection pooling, appliance 200 may translate or multiplex communications by modifying sequence numbers and acknowledgment numbers at the transport layer protocol level (e.g., "connection multiplexing"). Appliance 200 may also provide switching or load balancing for communications between the client 102 and server 106.

As described herein, each client 102 may include client agent 120 for establishing and exchanging communications with appliance 200 and/or server 106 via a network 104. Client 102 may have installed and/or execute one or more applications that are in communication with network 104. Client agent 120 may intercept network communications from a network stack used by the one or more applications. For example, client agent 120 may intercept a network communication at any point in a network stack and redirect the network communication to a destination desired, managed or controlled by client agent 120, for example to intercept and redirect a transport layer connection to an IP address and port controlled or managed by client agent 120. Thus, client agent 120 may transparently intercept any protocol layer below the transport layer, such as the network layer, and any protocol layer above the transport layer, such as the session, presentation or application layers. Client agent 120 can interface with the transport layer to secure, optimize, accelerate, route or load-balance any communications provided via any protocol carried by the transport layer.

In some embodiments, client agent 120 is implemented as an Independent Computing Architecture (ICA) client developed by Citrix Systems, Inc. of Fort Lauderdale, FL. Client agent 120 may perform acceleration, streaming, monitoring, and/or other operations. For example, client agent 120 may accelerate streaming an application from a server 106 to a client 102. Client agent 120 may also perform end-point detection/scanning and collect end-point information about client 102 for appliance 200 and/or server 106. Appliance 200 and/or server 106 may use the collected information to determine and provide access, authentication and authorization control of the client's connection to network 104. For example, client agent 120 may identify and determine one or more client-side attributes, such as: the operating system and/or a version of an operating system, a service pack of the operating system, a running service, a running process, a file, presence or versions of various applications of the client, such as antivirus, firewall, security, and/or other software.

### C. Systems and Methods for Providing Virtualized Application Delivery Controller

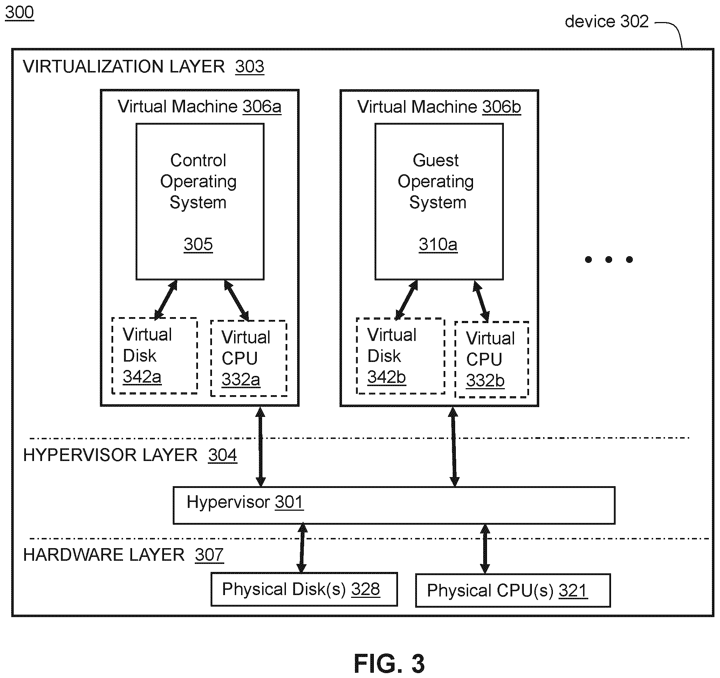

Referring now to FIG. 3, a block diagram of a virtualized environment 300 is shown. As shown, a computing device 302 in virtualized environment 300 includes a virtualization layer 303, a hypervisor layer 304, and a hardware layer 307. Hypervisor layer 304 includes one or more hypervisors (or virtualization managers) 301 that allocates and manages access to a number of physical resources in hardware layer 307 (e.g., physical processor(s) 321 and physical disk(s) 328) by at least one virtual machine (VM) (e.g., one of VMs 306) executing in virtualization layer 303. Each VM 306 may include allocated virtual resources such as virtual processors 332 and/or virtual disks 342, as well as virtual resources such as virtual memory and virtual network interfaces. In some embodiments, at least one of VMs 306 may include a control operating system (e.g., 305) in communication with hypervisor 301 and used to execute applications for managing and configuring other VMs (e.g., guest operating systems 310) on device 302.

In general, hypervisor(s) 301 may provide virtual resources to an operating system of VMs 306 in any manner that simulates the operating system having access to a physical device. Thus, hypervisor(s) 301 may be used to emulate virtual hardware, partition physical hardware, virtualize physical hardware, and execute virtual machines that provide access to computing environments. In an illustrative embodiment, hypervisor(s) 301 may be implemented as a Citrix Hypervisor by Citrix Systems, Inc. of Fort Lauderdale, FL. In an illustrative embodiment, device 302 executing a hypervisor that creates a virtual machine platform on which guest operating systems may execute is referred to as a host server. 302

Hypervisor 301 may create one or more VMs 306 in which an operating system (e.g., control operating system 305 and/or guest operating system 310) executes. For example, the hypervisor 301 loads a virtual machine image to create VMs 306 to execute an operating system. Hypervisor 301 may present VMs 306 with an abstraction of hardware layer 307, and/or may control how physical capabilities of hardware layer 307 are presented to VMs 306. For example, hypervisor(s) 301 may manage a pool of resources distributed across multiple physical computing devices.

In some embodiments, one of VMs 306 (e.g., the VM executing control operating system 305) may manage and configure other of VMs 306, for example by managing the execution and/or termination of a VM and/or managing allocation of virtual resources to a VM. In various embodiments, VMs may communicate with hypervisor(s) 301 and/or other VMs via, for example, one or more Application Programming Interfaces (APIs), shared memory, and/or other techniques.

In general, VMs 306 may provide a user of device 302 with access to resources within virtualized computing environment 300, for example, one or more programs, applications, documents, files, desktop and/or computing environments, or other resources. In some embodiments, VMs 306 may be implemented as fully virtualized VMs that are not aware that they are virtual machines (e.g., a Hardware Virtual Machine or HVM). In other embodiments, the VM may be aware that it is a virtual machine, and/or the VM may be implemented as a paravirtualized (PV) VM.

Although shown in FIG. 3 as including a single virtualized device 302, virtualized environment 300 may include a plurality of networked devices in a system in which at least one physical host executes a virtual machine. A device on which a VM executes may be referred to as a physical host and/or a host machine. For example, appliance 200 may be additionally or alternatively implemented in a virtualized environment 300 on any computing device, such as a client 102, server 106 or appliance 200. Virtual appliances may provide functionality for availability, performance, health monitoring, caching and compression, connection multiplexing and pooling and/or security processing (e.g., firewall, VPN, encryption/decryption, etc.), similarly as described in regard to appliance 200.

In some embodiments, a server may execute multiple virtual machines 306, for example on various cores of a multi-core processing system and/or various processors of a multiple processor device. For example, although generally shown herein as "processors" (e.g., in FIGs. 1C, 2 and 3), one or more of the processors may be implemented as either single- or multi-core processors to provide a multi-threaded, parallel architecture and/or multi-core architecture. Each processor and/or core may have or use memory that is allocated or assigned for private or local use that is only accessible by that processor/core, and/or may have or use memory that is public or shared and accessible by multiple processors/cores. Such architectures may allow work, task, load or network traffic distribution across one or more processors and/or one or more cores (e.g., by functional parallelism, data parallelism, flow-based data parallelism, etc.).

Further, instead of (or in addition to) the functionality of the cores being implemented in the form of a physical processor/core, such functionality may be implemented in a virtualized environment (e.g., 300) on a client 102, server 106 or appliance 200, such that the functionality may be implemented across multiple devices, such as a cluster of computing devices, a server farm or network of computing devices, etc. The various processors/cores may interface or communicate with each other using a variety of interface techniques, such as core to core messaging, shared memory, kernel APIs, etc.

In embodiments employing multiple processors and/or multiple processor cores, described embodiments may distribute data packets among cores or processors, for example to balance the flows across the cores. For example, packet distribution may be based upon determinations of functions performed by each core, source and destination addresses, and/or whether: a load on the associated core is above a predetermined threshold; the load on the associated core is below a predetermined threshold; the load on the associated core is less than the load on the other cores; or any other metric that can be used to determine where to forward data packets based in part on the amount of load on a processor.

For example, data packets may be distributed among cores or processes using receive-side scaling (RSS) in order to process packets using multiple processors/cores in a network. RSS generally allows packet processing to be balanced across multiple processors/cores while maintaining in-order delivery of the packets. In some embodiments, RSS may use a hashing scheme to determine a core or processor for processing a packet.

The RSS may generate hashes from any type and form of input, such as a sequence of values. This sequence of values can include any portion of the network packet, such as any header, field or payload of network packet, and include any tuples of information associated with a network packet or data flow, such as addresses and ports. The hash result or any portion thereof may be used to identify a processor, core, engine, etc., for distributing a network packet, for example via a hash table, indirection table, or other mapping technique.

### D. Systems and Methods for Providing a Distributed Cluster Architecture

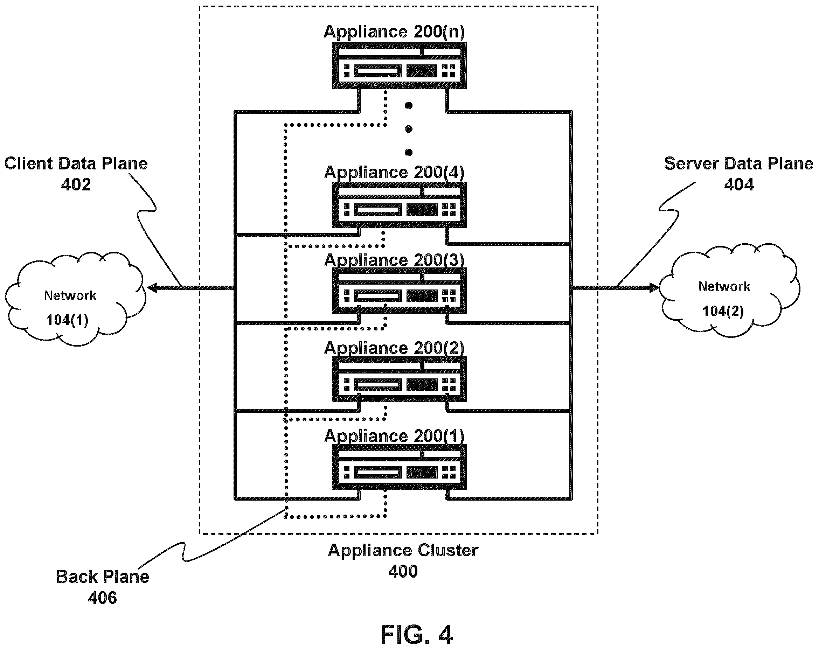

Although shown in FIGs. 1A and 1B as being single appliances, appliances 200 may be implemented as one or more distributed or clustered appliances. Individual computing devices or appliances may be referred to as nodes of the cluster. A centralized management system may perform load balancing, distribution, configuration, or other tasks to allow the nodes to operate in conjunction as a single computing system. Such a cluster may be viewed as a single virtual appliance or computing device. FIG. 4 shows a block diagram of an illustrative computing device cluster or appliance cluster 400. A plurality of appliances 200 or other computing devices (e.g., nodes) may be joined into a single cluster 400. Cluster 400 may operate as an application server, network storage server, backup service, or any other type of computing device to perform many of the functions of appliances 200 and/or 205.

In some embodiments, each appliance 200 of cluster 400 may be implemented as a multi-processor and/or multi-core appliance, as described herein. Such embodiments may employ a two-tier distribution system, with one appliance if the cluster distributing packets to nodes of the cluster, and each node distributing packets for processing to processors/cores of the node. In many embodiments, one or more of appliances 200 of cluster 400 may be physically grouped or geographically proximate to one another, such as a group of blade servers or rack mount devices in a given chassis, rack, and/or data center. In some embodiments, one or more of appliances 200 of cluster 400 may be geographically distributed, with appliances 200 not physically or geographically co-located. In such embodiments, geographically remote appliances may be joined by a dedicated network connection and/or VPN. In geographically distributed embodiments, load balancing may also account for communications latency between geographically remote appliances.

In some embodiments, cluster 400 may be considered a virtual appliance, grouped via common configuration, management, and purpose, rather than as a physical group. For example, an appliance cluster may comprise a plurality of virtual machines or processes executed by one or more servers.

As shown in FIG. 4, appliance cluster 400 may be coupled to a first network 104(1) via client data plane 402, for example to transfer data between clients 102 and appliance cluster 400. Client data plane 402 may be implemented a switch, hub, router, or other similar network device internal or external to cluster 400 to distribute traffic across the nodes of cluster 400. For example, traffic distribution may be performed based on equal-cost multi-path (ECMP) routing with next hops configured with appliances or nodes of the cluster, open-shortest path first (OSPF), stateless hash-based traffic distribution, link aggregation (LAG) protocols, or any other type and form of flow distribution, load balancing, and routing.

Appliance cluster 400 may be coupled to a second network 104(2) via server data plane 404. Similarly to client data plane 402, server data plane 404 may be implemented as a switch, hub, router, or other network device that may be internal or external to cluster 400. In some embodiments, client data plane 402 and server data plane 404 may be merged or combined into a single device.

In some embodiments, each appliance 200 of cluster 400 may be connected via an internal communication network or back plane 406. Back plane 406 may enable inter-node or inter-appliance control and configuration messages, for inter-node forwarding of traffic, and/or for communicating configuration and control traffic from an administrator or user to cluster 400. In some embodiments, back plane 406 may be a physical network, a VPN or tunnel, or a combination thereof.

### E. Service Graph Based Platform and Technology

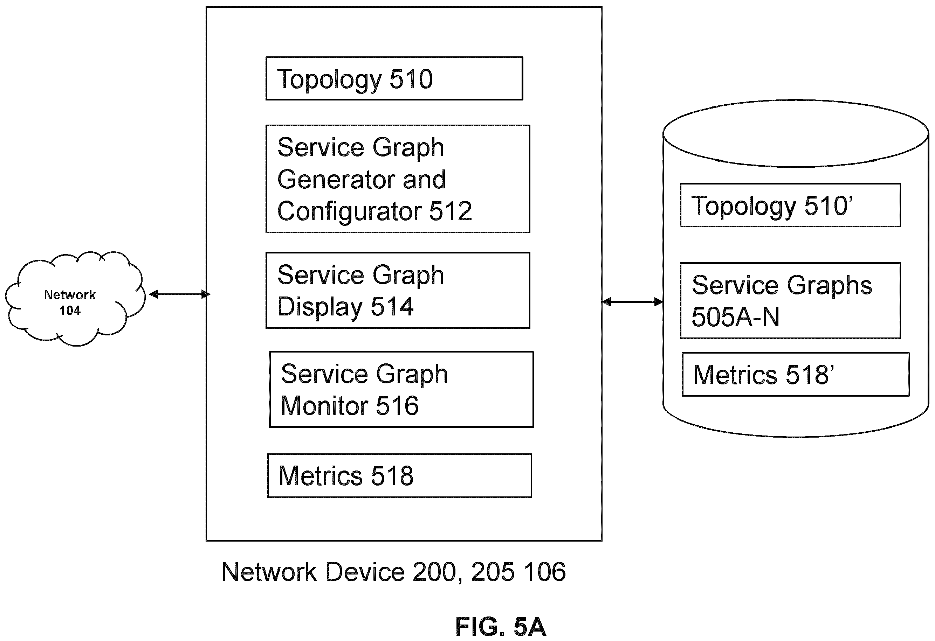

Referring now to FIGs. 5A-5C, implementation of systems and methods for a service graph based platform and technology will be discussed. A service graph is a useful technology tool for visualizing a service by its topology of components and network elements. Services may be made up of microservices with each microservice handling a particular set of one or more functions of the service. Network traffic may traverse the service topology such as a client communicating with a server to access service (e.g., north-south traffic). Network traffic of a service may include network traffic communicated between microservices of the services such as within a data center or between data centers (e.g., east-west traffic). The service graph may be used to identify and provide metrics of such network traffic of the service as well as operation and performance of any network elements used to provide the service. Service graphs may be used for identifying and determining issues with the service and which part of the topology causing the issue. Services graphs may be used to provide for administering, managing and configuring of services to improve operational performance of such services.

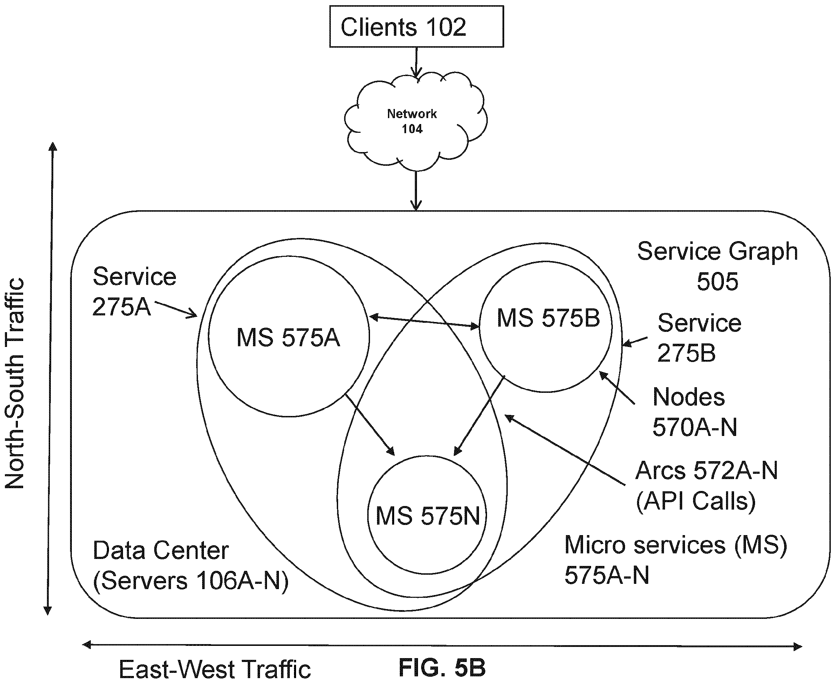

Referring to FIG. 5A, an implementation of a system for service graphs, such as those illustrated in FIG 5B, will be described. A device on a network, such as a network device 200, 205 or a server 206, may include a service graph generator and configurator 512, a service graph display 514 and service graph monitor 516. The service graph generator and configurator 512 (generally referred to as service graph generator 512), may identify a topology 510 of elements in the network and metrics 518 related to the network and the elements, to generate and/or configure service graphs 505A-N. The service graphs 505A-N (generally referred to as service graphs 505) may be stored in one or more databases, with any of the metric 518' and/or topology 510'. The service graphic generator 512 may generate data of the service graphs 505 to be displayed in a display or rendered form such as via a user interface, generated referred to as service graph display 514. Service graph monitor 516 may monitor the network elements of the topology and service for metrics 518 to configure and generate a service graph 505 and/or to update dynamically or in real-time the elements and metrics 518 of or represented by a service graph display 514.

The topology 510 may include data identifying, describing, specifying or otherwise representing any elements used, traversed in accessing any one or more services or otherwise included with or part of such one or more services, such as any of the services 275 described herein. The topology may include data identifying or describing any one or more networks and network elements traversed to access or use the services, including any network devices, routers, switches, gateways, proxies, appliances, network connections or links, Internet Service Providers (ISPs), etc. The topology may include data identifying or describing any one or more applications, software, programs, services, processes, tasks or functions that are used or traversed in accessing a service. In some implementations, a service may be made up or include multiple microservices, each providing one or more functions, functionality or operations of or for a service. The topology may include data identifying or describing any one or more components of a service, such as programs, functions, applications or microservices used to provide the service. The topology may include parameters, configuration data and/or metadata about any portion of the topology, such as any element of the topology.

A service graph 505 may include data representing the topology of a service 275, such any elements making up such a service or used by the service, for example as illustrated in FIG. 5B. The service graph may be in a node base form, such as graphical form of nodes and each node representing an element or function of the topology of the service. A service graph may represent the topology of a service using nodes connected among each other via various connectors or links, which may be referred to as arcs. The arc may identify a relationship between elements connected by the arc. Nodes and arcs may be arranged in a manner to identify or describe one or more services. Nodes and arcs may be arranged in a manner to identify or describe functions provided by the one or more services. For example, a function node may represent a function that is applied to the traffic, such as a transform (SSL termination, VPN gateway), filter (firewalls), or terminal (intrusion detection systems). A function within the service graph might use one or more parameters and have one or more connectors.

The service graph may include any combination of nodes and arcs to represent a service, topology or portions thereof. Nodes and arcs may be arranged in a manner to identify or describe the physical and/or logical deployment of the service and any elements used to access the service. Nodes and arcs may be arranged in a manner to identify or describe the flow of network traffic in accessing or using a service. Nodes and arcs may be arranged in a manner to identify or describe the components of a service, such as multiple microservices that communicate with each other to provide functionality of the service. The service graph may be stored in storage such as a database in a manner in order for the service graph generator to generate a service graph in memory and/or render the service graph in display form 514.

The service graph generator 512 may include an application, program, library, script, service, process, task or any type and form of executable instructions for establishing, creating, generating, implementing, configuring or updating a service graph 505. The service graph generator may read and/or write data representing the service graph to a database, file or other type of storage. The service graph generator may comprise logic, functions and operations to construct the arrangement of nodes and arcs to have an electronic representation of the service graph in memory. The service graph generator may read or access the data in the database and store data into data structures and memory elements to provide or implement a node based representation of the service graph that can be updated or modified. The service graph generator may use any information from the topology to generate a service graph. The service graph generator may make network calls or use discovery protocols to identify the topology or any portions thereof. The service graph generator may use any metrics, such as in memory or storage or from other devices, to generate a service graph. The service graph generator may comprise logic, functions and operations to construct the arrangement of nodes and arcs to provide a graphical or visual representation of the service graph, such as on a user interface of a display device. The service graph generator may comprise logic, functions and operations to configure any node or arc of the service graph to represent a configuration or parameter of the corresponding or underlying element represented by the node or arc. The service graph generator may comprise logic, functions and operations to include, identify or provide metrics in connection with or as part of the arrangement of nodes and arcs of the service graph display. The service graph generator may comprise an application programming interface (API) for programs, applications, services, tasks, processes or systems to create, modify or interact with a service graph.

The service graph display 514 may include any graphical or electronic representation of a service graph 505 for rendering or display on any type and form of display device. The service graph display may be rendered in visual form to have any type of color, shape, size or other graphical indicators of the nodes and arcs of the service graph to represent a state or status of the respective elements. The service graph display may be rendered in visual form to have any type of color, shape, size or other graphical indicators of the nodes and arcs of the service graph to represent a state or status of one or more metrics. The service graph display may comprise any type of user interface, such as a dashboard, that provides the visual form of the service graph. The service graph display may include any type and form of user interface elements to allow users to interact, interface or manipulate a service graph. Portion of the service graph display may be selectable to identify information, such as metrics or topology information about that portion of the service graph. Portions of the service graph display may provide user interface elements for users to take an action with respect to the service graph or portion thereof, such as to modify a configuration or parameter of the element.

The service graph monitor 518 may include an application, program, library, script, service, process, task or any type and form of executable instructions to receive, identify, process metrics 518 of the topology 510. The service graph monitor 518 monitors via metrics 518 the configuration, performance and operation of elements of a service graph. The service graph monitor may obtain metrics from one or more devices on the network. The service graph monitor may identify or generate metrics from network traffic traversing the device(s) of the service graph monitor. The service graph monitor may receive reports of metrics from any of the elements of the topology, such as any elements represented by a node in the service graph. The service graph monitor may receive reports of metrics from the service. From the metrics, the service graph monitor may determine the state, status or condition of an element represented in or by the service graph, such as by a node of the service graph. From the metrics, the service graph monitor may determine the state, status or condition of network traffic or network connected represented in or by the service graph, such as by an arc of the service graph. The service graph generator and/or service graph monitor may update the service graph display, such as continuously or in predetermined frequencies or event based, with any metrics or any changed in the state, status or condition of a node or arc, element represented by the node or arc, the service, network or network traffic traversing the topology.

The metrics 518, 518' (generally referred to as metrics 518) may be stored on network device in FIG. 5B, such as in memory or storage. The metrics 518, 518' may be stored in a database on the same device or over a network to another device, such as a server. Metrics may include any type and form of measurement of any element of the topology, service or network. Metrics may include metrics on volume, rate or timing of requests or responses received, transmitted or traversing the network element represented by the node or arc. A Metrics may include metrics on usage of a resource by the element represented by the node or arc, such as memory, bandwidth. Metrics may include metrics on performance and operation of a service, including any components or microservices of the service, such as rate of response, transaction responses and times.

FIG. 5B illustrates an implementation of a service graph in connection with micro-services of a service in view of east-west network traffic and north-south network traffic. In brief overview, clients 102 may access via one or more networks 104 a data center having servers 106A-106N (generally referred to as servers 106) providing one or more services 275A-275N (generally referred to as services 275). The services may be made up multiple microservices 575A-575N (generally referred to as microservice or micro service 575). Service 275A may include microservice 575A and 575N while service 275B may include microservice 575B and 575N. The microservices may communicate among the microservices via application programming interface (APIs). A service graph 505 may represent a topology of the services and metrics on network traffic, such as east-west network traffic and north-south network traffic.

North-south network traffic generally describes and is related to network traffic between clients and servers, such as client via networks 104 to servers of data center and/or servers to clients via network 104 as shown in FIG. 5B. East-west network traffic generally describes and is related to network traffic between elements in the data centers, such as data center to data center, server to server, service to service or microservice to microservice.

A service 275 may comprise microservices 575. In some aspects, microservices is a form of service-oriented architecture style wherein applications are built as a collection of different smaller services rather than one whole or singular application (referred to sometimes as a monolithic application). Instead of a monolithic application, a service has several independent applications or services (e.g., microservices) that can run on their own and may be created using different coding or programming languages. As such, a larger server can be made up of simpler and independent programs or services that are executable by themselves. These smaller programs or services are grouped together to deliver the functionalities of the larger service. In some aspects, a microservices based service structures an application as a collection of services that may be loosely coupled. The benefit of decomposing a service into different smaller services is that it improves modularity. This makes the application or service easier to understand, develop, test, and be resilient to changes in architecture or deployment.

A microservice includes an implementation of one or more functions or functionality. A microservice may be a self-contained piece of business function(s) with clear or established interfaces, such as an application programming interface (API). In some implementations, a microservice may be deployed in a virtual machine or a container. A service may use one or more functions on one microservice and another one or more functions of a different microservice. In operating or executing a service, one microservice may make API calls to another microservice and the microservice may provide a response via an API call, event handler or other interface mechanism. In operating or executing a microservice, the microservice may make an API call to another microservice, which in its operation or execution, makes a call to another microservice, and so on.

The service graph 505 may include multiple nodes 570A-N connected or linked via one or more or arcs 572A-572N. The service graph may have different types of nodes. A node type may be used to represent a physical network element, such as a server, client, appliance or network device. A node type may be used to represent an end point, such as a client or server. A node type may be used to represent an end point group, such as group of clients or servers. A node type may be used to represent a logical network element, such as a type of technology, software or service or a grouping or sub-grouping of elements. A node type may be used to represent a functional element, such as functionality to be provided by an element of the topology or by the service.

The configuration and/or representation of any of the nodes 570 may identify a state, a status and/or metric(s) of the element represented by the node. Graphical features of the node may identify or specify an operational or performance characteristic of the element represented by the node. A size, color or shape of the node may identify an operational state of whether the element is operational or active. A size, color or shape of the node may identify an error condition or issue with an element. A size, color or shape of the node may identify a level of volume of network traffic, a volume of request or responses received, transmitted or traversing the network element represented by the node. A size, color or shape of the node may identify a level of usage of a resource by the element represented by the node, such as memory, bandwidth, CPU or storage. A size, color or shape of the node may identify relativeness with respect to a threshold for any metric associated with the node or the element represented by the node.

The configuration and/or representation of any of the arcs 572 may identify a state, status and/or metric(s) of the element represented by the arc. Graphical features of the arc may identify or specify an operational or performance characteristic of the element represented by the arc. A size, color or shape of the node may identify an operational state of whether the network connection represented by the arc is operational or active. A size, color or shape of the arc may identify an error condition or issue with a connection associated with the arc. A size, color or shape of the arc may identify an error condition or issue with network traffic associated with the arc. A size, color or shape of the arc may identify a level of volume of network traffic, a volume of request or responses received, transmitted or traversing the network connection or link represented by the arc. A size, color or shape of the arc may identify a level of usage of a resource by network connection or traffic represented by the arc, such as bandwidth. A size, color or shape of the node may identify relativeness with respect to a threshold for any metric associated with the arc. In some implementations, a metric for the arc may include any measurement of traffic volume per arc, latency per arc or error rate per arc.

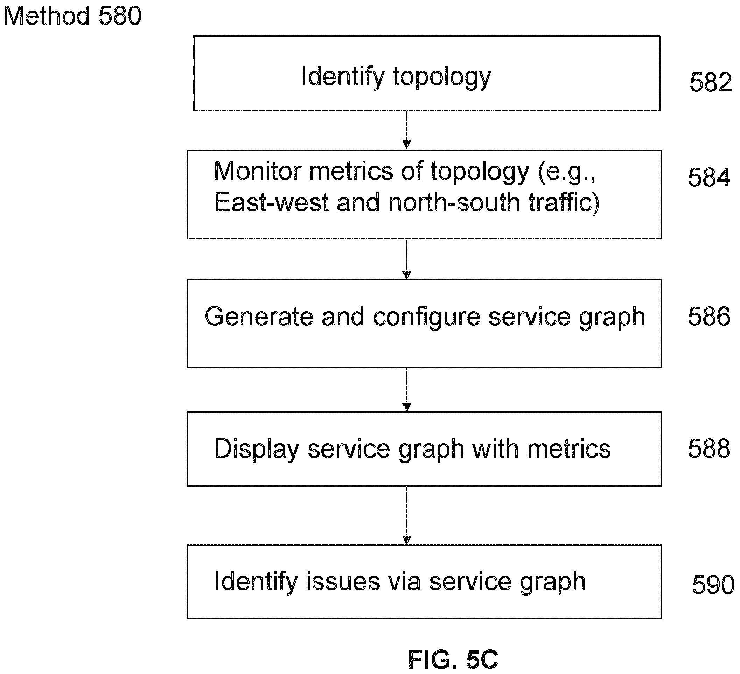

Referring now to FIG. 5C, an implementation of a method for generating and displaying a service graph will be described. In brief overview of method 580, at step 582, a topology is identified, such as for a configuration of one or more services. At step 584, the metrics of elements of the topology, such as for a service are monitored. At step 586, a service graph is generated and configured. At step 588, a service graph is displayed. At step 590, issues with configuration, operation and performance of a service or the topology may be identified or determined.

At step 582, a device identifies a topology for one or more services. The device may obtain, access or receive the topology 510 from storage, such as a database. The device may be configured with a topology for a service, such as by a user. The device may discover the topology or portions therefore via one more discovery protocols communicated over the network. The device may obtain or receive the topology or portions thereof from one or more other devices via the network. The device may identify the network elements making up one or more services. The device may identify functions providing the one or more services. The device may identify other devices or network elements providing the functions. The device may identify the network elements for north-west traffic. The device may identify the network elements for east-west traffic. The device may identify the microservices providing a service. In some implementations, the service graph generator establishes or generates a service graph based on the topology. The service graph may be stored to memory or storage.

At step 584, the metrics of elements of the topology, such as for a service are monitored. The device may receive metrics about the one or more network elements of the topology from other devices. The device may determine metrics from network traffic traversing the device. The device may receive metrics from network elements of the topology, such as via reports or events. The device may monitor the service to obtain or receive metrics about the service. The metrics may be stored in memory or storage, such as in association with a corresponding service graph. The device may associate one or more of the metrics with a corresponding node of a service graph. The device may associate one or more of the metrics with a corresponding arc of a service graph. The device may monitor and/or obtain and/or receive metrics on a scheduled or predetermined frequency. The device may monitor and/or obtain and/or receive metrics on a continuous basis, such as in real-time or dynamically when metrics change.

At step 586, a service graph is generated and configured. A service graph generator may generate a service graph based at least on the topology. A service graph generator may generate a service graph based at least on a service. A service graph generator may generate a service graph based on multiple services..A service graph generator may generate a service graph based at least on the microservices making up a service. A service graph generator may generate a service graph based on a data center, servers of the data center and/or services of the data center. A service graph generator may generate a service graph based at least on east-west traffic and corresponding network elements. A service graph generator may generate a service graph based at least on north-south traffic and corresponding network elements. A service graph generator may configure the service graph with parameters, configuration data or meta-data about the elements represented by a node or arc of the service graph. The service graph may be generated automatically by the device. The service graph may be generated responsive to a request by a user, such as via a comment to or user interface of the device.

At step 588, a service graph is displayed. The device, such as via service graph generator, may create a service graph display 514 to be displayed or rendered via a display device, such as presented on a user interface. The service graph display may include visual indicators or graphical characteristics (e.g., size, shape or color) of the nodes and arcs of the service graph to identify status, state or condition of elements associated with or corresponding to a node or arc. The service graph display may be displayed or presented via a dashboard or other user interface in which a user may monitor the status of the service and topology. The service graph display may be updated to show changes in metrics or the status, state and/or condition of the service, the topology or any elements thereof. Via the service graph display, a user may interface or interact with the service graph to discover information, data and details about any of the network elements, such as the metrics of a microservice of a service.

At step 590, issues with configuration, operation and performance of a service or the topology may be identified or determined. The device may determine issues with the configuration, operation or performance of a service by comparing metrics of the service to thresholds. The device may determine issues with the configuration, operation or performance of a service by comparing metrics of the service to previous or historical values. The device may determine issues with the configuration, operation or performance of a service by identifying a change in a metric. The device may determine issues with the configuration, operation or performance of a service by identifying a change in a status, state or condition of a node or arc or elements represented by the node or arc. The device may change the configuration and/or parameters of the service graph. The device may change the configuration of the service. The device may change the configuration of the topology. The device may change the configuration of network elements making up the topology or the service. A user may determine issues with the configuration, operation or performance of a service by reviewing, exploring or interacting with the service graph display and any metrics. The user may change the configuration and/or parameters of the service graph. The user may change the configuration of the service. The user may change the configuration of the topology. The device may change the configuration of network elements making up the topology or the service.

### F. Systems and Methods for Monitoring API SLAs

The present disclosure is directed towards systems and methods for monitoring service level(s) of a service, in connection with a SLA for instance. Most service providers place the onus on the consumer to determine when the SLA for a particular service has been breached. In other words, the service provider may not actively monitor for adherence to a SLA, and/or may not actively enforce the SLA. In accordance with embodiments of the present systems and methods, an API monitor (or API broker) can monitor the service level(s) of a service by monitoring requests in connection with the service. The API monitor can receive, handle, intercept and/or process these requests by monitoring or instance APIs of the service.

The API monitor can monitor or track service usage, quality, disruptions and/or other statistics of the service, which can be indicative of actual service level(s) attained or provided by the service. The API monitor can compare the statistics against predefined thresholds to identify instances or evidence of the SLA being breached or not met. Responsive to identifying such instances or evidence, the API monitor can generate and/or transmit a notification or report to the consumer and/or service provider, e.g., for action to improve service level(s), and/or for compensation to the consumer for breaching the SLA.

As indicated above, third-party service providers typically do not monitor for SLA breaches or actively enforce the SLA. A consumer (e.g., entity such as an organization or user that uses or relies on the service) may be rendered unprotected against such SLA breaches, and can suffer degraded user experience and service, without effective recourse. To address this challenge and problem, the present solution provides for the use of an API monitor to track service levels by collecting and/or processing statistics about the service. The API monitor can for instance monitor APIs associated with the service (e.g., including micro services of the service), by accessing these APIs or causing the APIs to route or direct requests to the API monitor for tracking. By recording all such requests or calls to the service, the API monitor can provide the consumer with actionable information (e.g., intelligence, analytics) about service level(s). Such actionable information can include statistics such as duration of a service session, call/request count or frequency (e.g., over a time period), number or frequency of service failures (e.g., over a time period), latency of service in response to a request/call, start time of request, and/or end time corresponding to a response from the service, etc. Further, the present solution provide an avenue for seeking recourse, by utilizing the API monitor to compare the information against defined thresholds (set according to the SLA), so as to trigger a notification or report to the consumer and/or service provider, for action to improve service level(s), and/or for requesting compensation for the consumer for the breach in the SLA.

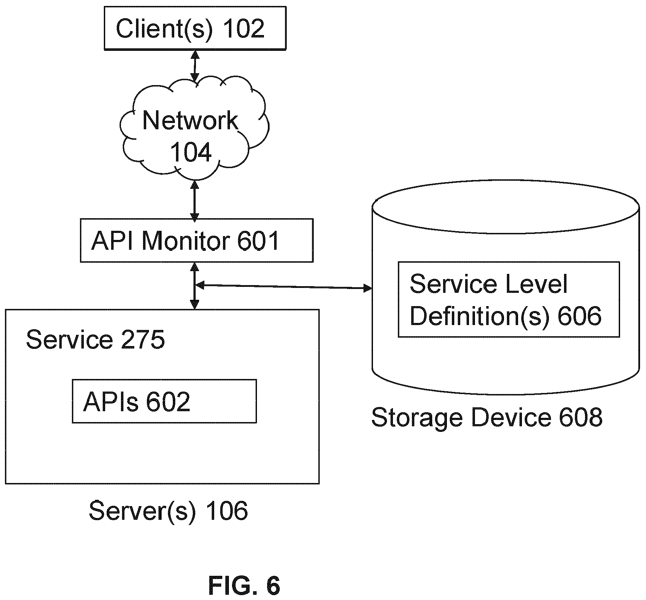

Referring to FIG. 6, depicted is a block diagram of one example embodiment of a system 600 for monitoring API SLAs. The system 1100 may include one or more clients 102 of an entity, an API monitor 601, a storage device 608 for maintaining service level definition(s) 606, and/or a service 275 hosted on one or more servers 106 (e.g., on a cloud). The service 275 can include one or more APIs 602.

Each of the above-mentioned elements or entities is implemented in hardware, or a combination of hardware and software, in one or more embodiments. Each component of the system 1100 may be implemented using hardware or a combination of hardware or software detailed above in connection with FIG. 1C. For instance, each of these elements or entities can include any application, program, library, script, task, service, process or any type and form of executable instructions executing on hardware of a client device 102, a server 106 and/or a network device 200 in connection with FIGs 1B-1C, for instance. The hardware includes circuitry such as one or more processors in one or more embodiments.

The server(s) 106 may host and or provision one or more services to one or more clients 102 of a consumer or other entity (e.g., an organization or user), via one or more networks 104. For example, a client 102 may establish one or more sessions or connections (e.g., secured or otherwise, such as a secure socket layer virtual private network connection) with the server(s) 106 to access a service 275.

The client(s) 102 can correspond to devices of a consumer of the service. For example, if the consumer is an individual user, the user may have a smartphone, a laptop (e.g., at home), a tablet device, and a desktop computer (e.g., at work), that the user may use to access a Dropbox service at various times and/or locations for instance. In an example where the consumer is an organization, such as an enterprise, the consumer can extend over a number users (e.g., management persons, staff members, IT administrators, and so on) and their associated client(s) 102 or devices (e.g., corporate-issued device, personally-owned devices, and/or registered/approved devices (e.g., in a BYOD program)). Any number of the users may access a service (e.g., salesforce.com, SAP, Microsoft Office 365) from a service provider, via a corporate account for the service (e.g., associated with a SLA) for instance.

The server(s) 106 can be part of a cloud or datacenter for instance. The server(s) 106 may include any embodiment of volatile memory 122 or non-volatile memory 128 (discussed in FIG. 1C for example) which may store files, data and/or content of the service. The server(s) 106 may communicate with other various components of the system in FIG. 6 via a communications interface 118 for instance. Hence, the server(s) 106 may be similar in some aspects to the computer 101 described with reference to FIG. 1C.

To provide a service 275, the server(s) 106 may execute, provide, provision, and/or host one or more network application(s). In some embodiments, a service 275 may be referred to interchangeably with an application or network application. A network application can for instance include a remote-hosted application, a remote-hosted desktop, a web application or a software-as-a-service (SaaS) application. A remote-hosted desktop may be a virtual desktop hosted on the server 106 which is accessed by or remotely provisioned to the client 102. In some embodiments, the delivery of a remote-hosted desktop may be via a session and/or connection based on High-Definition User Experience (HDX) or Independent Computing Architecture (ICA) display remoting protocol, or Remote Desktop Protocol (RDP). A remote-hosted application may include correspond to an application service that can be delivered via a HDX-based, ICA-based, RDP-based, etc., session and/or connection. In some embodiments, a remote-hosted application may be an application which is installed on/in the remote-hosted desktop environment and is therefore accessible within the remote-hosted desktop. A SaaS application can be a centrally-hosted application which is typically accessible on a subscription basis. In some embodiments, the SaaS applications may be web-based applications. In other embodiments, the SaaS applications may correspond to remote-hosted applications and, therefore, can be delivered in HDX/ICA/RDP -based sessions and/or connections. SaaS applications and/or web applications may include salesforce.com, SAP, Microsoft Office 365, Dropbox or Gmail service, Amazon web services, and so on.

A service 275 may comprise micro services (e.g., micro services 575 discussed above in connection with FIG. 5B). In some aspects, micro services refer to a form of service-oriented architecture style wherein applications are built as a collection of different smaller services rather than one whole or singular application (referred to sometimes as a monolithic application). Instead of a monolithic application, a service can have several independent applications or services (e.g., micro services) that can run on their own and may be created using different coding or programming languages. As such, a larger service can be made up of simpler and independent programs or services that are executable by themselves. These smaller programs or services can be grouped together to deliver the functionalities of the larger service. In some aspects, a micro services based service structures an application as a collection of services that may be loosely coupled. The benefit of decomposing a service 275 into different smaller services is that it can improve modularity. This can make the application or service 275 easier to understand, develop, test, and be resilient to changes in architecture or deployment.

A micro service can include an implementation of one or more functions or functionality. A micro service may be a self-contained piece of business function(s) with clear or established interfaces, such as an application programming interface (API). In some implementations, a micro service may be deployed in a virtual machine or a container. A service 275 may use or provide one or more functions on one micro service and another one or more functions of a different micro service. In operating or executing a service, one micro service may make API calls to another micro service and the micro service may provide a response via an API call, event handler or other interface mechanism. In operating or executing a micro service, the micro service may make an API call to another micro service, which in its operation or execution, makes a call to another micro service, and so on.

As discussed above, a service can include a plurality of micro services which can correspond to or include APIs 602. In some embodiments, a service 275 can include one or more APIs 602 that may not be part of or associated with micro services. When a client 102 sends a request or performs a call to the service, the request or call may be directed to a certain API 602 of the service. The service 275 may respond to the request or call via the same API 602 or another API 602 of the service. Accordingly, usage of the service 275, traffic statistics, and/or issues associated with the service 275, can be monitored via APIs 602 of the service 275.

The consumer and/or the service provider can use an API monitor 601 to monitor usage of the service 275, traffic statistics, and/or issues associated with the service 275. The API monitor 601 can execute on any one or more of the client(s) 102, the server(s) 106, or a network device on the network 104. For instance, the API monitor 601 may reside on and/or execute on a server, and be part of cloud services available to the consumer for monitoring and/or administrative purposes. In some embodiments, the API monitor 601 may be installed on a network device inline or intermediary between the client(s) 102 and the server(s) 106, which can allow the API monitor 601 to intercept, receive, monitor and/or access network traffic of the service 275 between the client(s) 102 and the server(s) 106. The API monitor 601 may be authenticated and/or authorized by the client(s) 102 and/or the server(s) 106 (e.g., has access to a shared encryption key), to access the network traffic and/or the APIs 602 of the service 275.

In some embodiments, the client(s) 102 and/or the server(s) 106 are configured to route or direct calls or requests to the service 275 through the API monitor 601. For example, agent(s) or listening program(s) can be installed at the client(s) 102 and/or the server(s) 106 to relay, route or direct such calls/requests (or information thereof) to the API monitor 601. In certain embodiments, a domain name service of the client(s) 102 can be configured to identify requests/calls directed to the server(s) 106 or service 275, and can route or direct the requests/calls to or through the API monitor 601. The API monitor 601 can be designed and/or implemented to access the APIs 602 of the service 275, or to access information captured or collected at the APIs 602. For example, the API monitor 601 can be configured as part of a SLA negotiation, to monitor and enforce the corresponding SLA. In some embodiments, the API monitor can operate on behalf of the consumer (e.g., the client(s) 102) in interfacing with the service 275 (e.g., the APIs of the service 275). For instance, the SLA monitor 601 can appear to the service 275 as the consumer, and transparently operate to interface with the APIs on behalf of the consumer. For this, the API monitor 601 can operate as a wrapper around the consumer or as an interface between the consumer and the service 275 (or APIs 602).

The API monitor 601 can monitor any type or form of information from the APIs and/or the requests/calls. The API monitor 601 can gather, collect, track, process and/or analyze the information, which can include statistics about the usage and/or performance of the service 275 over period(s) of time for instance. The API monitor 601 can gather, collect, track, process and/or analyze all outgoing and/or incoming traffic in connection with the service 275. The API monitor 601 can for instance track the number and/or frequency of requests/calls, the duration of each service/micro service session, the types of micro services requested, the number and/or frequency of dropped requests/calls (e.g., failure rate), the number and/or frequency of repeat requests/calls due to failure or non-acknowledgment, the data rate achieved and/or supported by the service 275, the bandwidth consumed by the service/micro service (e.g., in each session), the latency or response time to a request/call, the start time and/or end time of a session, duration(s) of service/micro service failure or outage, statistics on breaches of SLA, information that can justify and/or evidence the SLA being breached or missed, and so on.

The API monitor 601 may process and/or analyze the information to generate statistics, intelligence and/or analytics about the usage and/or performance of the service 275, and/or to identify breaches of the SLA established between the service provider and the consumer. The API monitor 601 may apply one or more policies or rules to the information, statistics, intelligence and/or analytics, to detect breaches of the SLA (e.g., that cannot be justified). The API monitor 601 may apply one or more policies or rules to the information, statistics, intelligence and/or analytics, to compare against predefined threshold(s). Such thresholds can be set according to metrics, thresholds, ranges, values and/or requirements in service level(s) specified in the SLA established between the service provider and the consumer. For example, the API may compare (e.g., via the one or more policies or rules), whether a statistic on service usage or performance meets a predefined threshold (e.g., that is set according to the SLA). For instance, the threshold may correspond to X service failures over a 24-hour period, which can be equal to the maximum number of allowable service failures specified in the SLA. As another example, the threshold may correspond to a data rate of Y kbits per second, which may be 80% of the minimum data rate that the SLA guarantees or agreed to provide.

In some embodiments, the API monitor 601 may request for, access and/or retrieve the SLA. The API monitor 601 may request for, access and/or retrieve the service level definitions for the SLA. Service level definitions may include metrics, thresholds, ranges, values and/or requirements in service level(s) specified in the SLA established between the service provider and the consumer. Service level definitions may for instant specify, define or indicate metrics, thresholds, ranges, values and/or requirements in service level(s) that the SLA guarantees or agreed to provide. For example, service level definitions may set a minimum and/or maximum data rate that the service can support (e.g., for video stream or a voice call), a maximum number of service/micro service failures over a period of time, a maximum length of service/micro service outage over a period of time, a maximum accumulated length of service/micro service outage over a period of time, a minimum number of requests/calls without encountering service/micro service failure, a maximum acceptable percentage of failures or dropped requests/calls, a maximum latency in responding to a request/call, a minimum service/micro service session duration without encountering service/micro service failure, etc.

The API monitor 601 may request the server(s) 106 and/or the client(s) 102 for the service level definitions. The API monitor 601 may access and/or retrieve the SLA from a database, and/or from a storage device 608. In some embodiments or situations, the service level definitions correspond to a general SLA offered by the service provider to all or most consumers of the service 275. In certain embodiments or situations, the service level definitions correspond to a custom and/or negotiated SLA determined by the service provider and the particular consumer for the specific service 275. The API monitor 601 may request or lookup the SLA or service level definitions (e.g., from a stored plurality of SLAs or sets of service level definitions) for the service 275 and/or the consumer. Based on the SLA or service level definitions, the API monitor 601 may identify, determine and/or set threshold(s) and/or policies for analyzing and/or taking action on the information, statistics, intelligence and/or analytics about the usage and/or performance of the service 275.

In some embodiments, the API monitor 601 may determine to generate, provide or send a report or notification, in accordance with the one or more policies or threshold comparisons. The API monitor 601 may determine to transmit or provide the report or notification in response to detecting a breach in the SLA (e.g., that cannot be justified), or in response to detecting a breach in the SLA beyond a certain threshold (e.g., at least 2 more service failures over 24 hours, beyond the SLA-specified maximum of 10 service failures over the same period). The report or notification can include any form or portion of the information collected, gathered or accessed from the APIs and/or traffic. The report or notification can include any form or portion of the information, statistics, intelligence and/or analytics about the usage and/or performance of the service 275, generated by the API monitor 601.

The API monitor 601 may send the report or notification to the consumer (e.g., to the client 102) and/or to the service provider (e.g., to the server 106), to provide justification or evidence to request, ask, demand or negotiate for service level improvement, compensation for missed SLA, and so on. In some embodiments, the API monitor 601 may send the report or notification in the form of a service graph as discussed in connection with FIGs. 5A-5B for instance. For example, the API monitor 601 may annotate information, statistics, intelligence and/or analytics about the usage and/or performance of the service 275 on to the service graph. The API monitor 601 may send the report or notification via any form or type of communication, e.g., a text message, an email, or an application notification, a voice message. In some embodiments, the API monitor 601 provides or inserts the report or notification in a logfile (e.g., accessible by the consumer and/or the service provider), which may be stored in a storage device 608 or other location in the network 104.

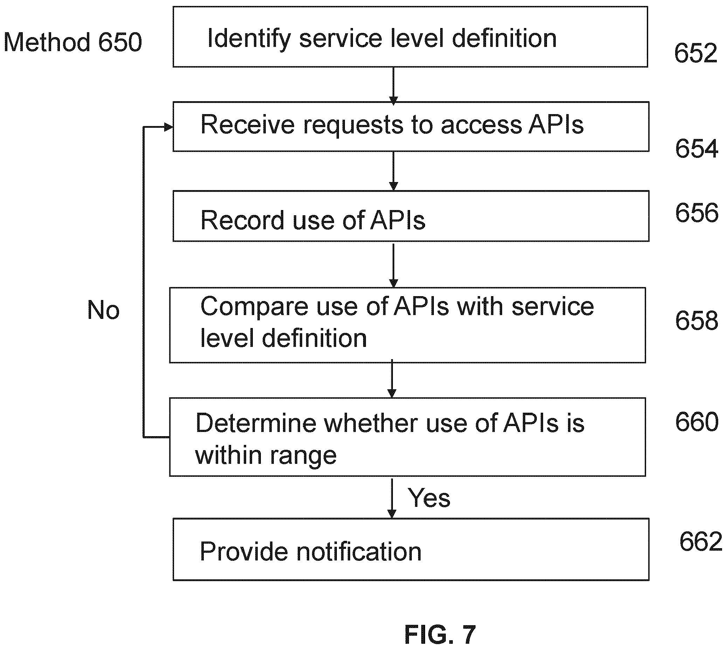

Referring to FIG. 7, depicted is a flow diagram of one embodiment of a method for monitoring APIs for a service. The functionalities of the method may be implemented using, or performed by, the components detailed herein in connection with FIGs. 1-6. In brief overview, a device may identify service level definition(s) (652). The device may receive requests to access APIs (654). The device can record use of the APIs (656). The device can compare the use of the APIs with the service level definition(s) (658). The device can determine whether the use of the APIs is within range (660). The device can provide notification (662).

Referring now to operation (652), and in some embodiments, a device may identify service level definition(s). The device may include an API monitor 601, and may identify a service level definition for a service 275 used or accessed by an entity (e.g., used or accessed by a consumer or user via a client 102). The service can include a plurality of application programming interfaces (APIs). The service may be hosted on and provisioned from a server 106. The service may be hosted on a remote server of a third party (e.g., the service provider). The service can include a plurality of micro services and/or a plurality of APIs. One or more APIs of the plurality of APIs can correspond to one or more of the plurality of micro services.

The device or API monitor 601 may request the server 106 and/or the client 102 for the service level definition(s). The device or API monitor 601 may request for, identify and/or access the service level definition(s) and/or corresponding SLA based on an identifier of the entity (e.g., consumer) and/or an identifier of the service. The device or API monitor 601 may obtain or receive the service level definition(s) or SLA from a third party providing the service on a remote server. The device or API monitor 601 may access and/or retrieve the service level definition(s) or a corresponding SLA from a database, and/or from a storage device 608. In some embodiments or situations, the service level definitions correspond to a general SLA offered by the service provider to all or most consumers of the service 275. In certain embodiments or situations, the service level definitions correspond to a custom and/or negotiated SLA determined by the service provider and the particular consumer for the specific service 275. The device or API monitor 601 may request or lookup the SLA or service level definition(s) for the service 275 and/or the consumer. The device or API monitor 601 may request or lookup the SLA or service level definition(s) from a stored plurality of SLAs or sets of service level definitions.

The device or API monitor 601 may identify the service level definitions from the SLA. The device or API monitor 601 may configure one or more policies based at least on the service level definition(s). Based on the SLA or service level definitions, the device or API monitor 601 may identify, determine and/or set threshold(s) and/or policies for analyzing and/or taking action on information, statistics, intelligence and/or analytics about the usage and/or performance of the service 275. The service level definition(s) can include one or more thresholds regarding use of the service by the entity of the plurality of APIs, and/or regarding performance of the service._Service level definitions may include metrics, thresholds, ranges, values and/or requirements in service level(s) specified in the SLA established between the service provider and the consumer. Service level definitions may for instant specify, define or indicate metrics, thresholds, ranges, values and/or requirements in service level(s) that the SLA guarantees or agreed to provide. For example, service level definitions may set a minimum and/or maximum data rate that the service can support (e.g., for video stream or a voice call), a maximum number of service/micro service failures over a period of time, a maximum length of service/micro service outage over a period of time, a maximum accumulated length of service/micro service outage over a period of time, a minimum number of requests/calls without encountering service/micro service failure, a maximum acceptable percentage of failures or dropped requests/calls, a maximum latency in responding to a request/call, a minimum service/micro service session duration without encountering service/micro service failure, etc.

Referring now to operation (654), and in some embodiments, the device or API monitor may receive requests to access APIs. The device or API monitor can receive, from one or more devices (e.g., clients 102) of the entity, a plurality of requests to access one or more APIs of the plurality of APIs of the service._The device or API monitor 601 to monitor usage of the service 275, traffic statistics, and/or issues associated with the service 275. The device or API monitor 601 can execute on any one or more of the client 102, the server 106, or a network device on a network 104. For instance, the API monitor 601 may reside on and/or execute on a server, and be part of cloud services available to the consumer for monitoring and/or administrative purposes. In some embodiments, the API monitor 601 may be installed on a network device inline or intermediary between the client 102 and the server 106, which can allow the API monitor 601 to intercept, receive, monitor and/or access network traffic of the service 275 between the client 102 and the server 106. The API monitor 601 may be authenticated and/or authorized by the client 102 and/or the server 106 to access network traffic and/or the APIs 602 of the service 275.

In some embodiments, the client 102 and/or the server 106 are configured to route or direct calls or requests to the service 275 through the API monitor 601. For example, agent(s) or listening program(s) can be installed at the client 102 and/or the server 106 to relay, route or direct such calls/requests (or information thereof) to the API monitor 601. In certain embodiments, a domain name service of the client 102 can be configured to identify outgoing requests/calls directed to the server 106 or service 275, and can route or direct the requests/calls to or through the API monitor 601. The API monitor 601 can be designed and/or implemented to access the APIs 602 of the service 275, or to access information captured or collected at the APIs 602. For example, the API monitor 601 can be configured as part of a SLA negotiation, to monitor and enforce the corresponding SLA. In some embodiments, the API monitor can operate on behalf of the entity (e.g., the client 102) in interfacing with the service 275 (e.g., the APIs of the service 275). For instance, the SLA monitor 601 can appear to the service 275 as the entity, and transparently operate to interface with the APIs on behalf of the entity. For this, the API monitor 601 can operate as a wrapper around the entity or as an interface between the entity and the service 275 (or APIs 602).

Referring now to operation (656), and in some embodiments, the device or API monitor may record use of the APIs. The device or API monitor can monitor or record information about the entity's use of the plurality of APIs of the service. The device or API monitor can monitor or record information comprising one or more of the following: a number of requests per time period, a number of requests that succeed per time period, a number of requests that fail per time period, a response time per request._The API monitor 601 can monitor any type or form of information from the APIs and/or the requests/calls. The API monitor 601 can gather, collect, track, process and/or analyze the information, which can include statistics about the usage and/or performance of the service 275 over period(s) of time for instance.

The API monitor 601 can gather, collect, track, process and/or analyze all outgoing and/or incoming traffic in connection with the service 275. The API monitor 601 can for instance track the number and/or frequency of requests/calls, the duration of each service/micro service session, the types of micro services requested, the number and/or frequency of dropped requests/calls (e.g., failure rate), the number and/or frequency of repeat requests/calls due to failure or non-acknowledgment, the data rate achieved and/or supported by the service 275, the bandwidth consumed by the service/micro service (e.g., in each session), the latency or response time to a request/call, the start time and/or end time of a session, duration(s) of service/micro service failure or outage, statistics on breaches of SLA, information that can justify and/or evidence the SLA being breached or missed, and so on.

Referring now to operation (658), and in some embodiments, the device can compare the use of the APIs and/or the performance of the service, with the service level definition(s). The device can compare the recorded information about the entity's use of the plurality of APIs of the service, to the one or more thresholds of the service level definition(s). For example, a threshold of the one or more thresholds can corresponds to that of a micro service of the plurality of micro services, based on the service level definitions (of the micro service or the service).

The API monitor 601 may process and/or analyze the information to generate statistics, intelligence and/or analytics about the usage and/or performance of the service 275, and/or to identify breaches of the SLA established between the service provider and the consumer. The API monitor 601 may apply one or more policies or rules to the information, statistics, intelligence and/or analytics, to detect breaches of the SLA (e.g., that cannot be justified). The API monitor 601 may apply one or more policies or rules to the information, statistics, intelligence and/or analytics, to compare against predefined threshold(s). Such thresholds can be set according to metrics, thresholds, ranges, values and/or requirements in service level(s) specified in the SLA established between the service provider and the consumer.

For example, the API may compare (e.g., via the one or more policies or rules), whether a statistic on service usage or performance meets a predefined threshold (e.g., that is set according to the SLA). For instance, the threshold may correspond to X service failures over a 24-hour period, which can be equal to the maximum number of allowable service failures specified in the SLA. As another example, the threshold may correspond to a data rate of Y kbits per second, which may be 80% of the minimum data rate that the SLA guarantees or agreed to provide.

Referring now to operation (660), and in some embodiments, the device or API monitor can determine whether the use of the APIs and/or the performance of the service is within a defined range (e.g., an acceptable range relative to the service level definition(s)). The device or API monitor can determine that the entity's use of the plurality of APIs, and/or the performance of the service, is within a predetermined or acceptable range of a threshold of the one or more thresholds of the service level definition. For example, a predetermined or acceptable range of the threshold may include or identify a percentage of a threshold (identified in the SLA or service level definitions), or a percentage over the threshold, or a percentage under the threshold. The device or API monitor can therefore detect a breach in the SLA beyond a certain threshold (e.g., at least 2 more service failures over 24 hours, beyond the SLA-specified maximum of 10 service failures over the same period). Such a detection can trigger the device or API monitor to provide a notification.

Referring now to operation (662), and in some embodiments, the device or API monitor can provide a notification, e.g., in response to the detection or determination against the predetermined threshold or range. The device or API monitor can provide notification of the determination of whether the use of the APIs, or the performance of the service is within the acceptable or predetermined range. In some embodiments, the device or API monitor may determine to generate, provide or send a report or notification, in accordance with the one or more policies or threshold comparisons. The device or API monitor may determine to transmit or provide the report or notification in response to detecting a breach in the SLA (e.g., that cannot be justified), or in response to detecting a breach in the SLA beyond a certain threshold (e.g., at least 2 more service failures over 24 hours, beyond the SLA-specified maximum of 10 service failures over the same period).

The report or notification can include any form or portion of the information collected, gathered or accessed from the APIs and/or traffic. The report or notification can include any form or portion of the information, statistics, intelligence and/or analytics about the usage and/or performance of the service 275, generated by the API monitor 601.

The device or API monitor may send the report or notification to the entity (e.g., to the client 102) and/or to the service provider (e.g., to the server 106), to provide justification or evidence to request, ask, demand or negotiate for service level improvement, compensation for missed SLA, and so on. In some embodiments, the device or API monitor may send the report or notification in the form of a service graph as discussed in connection with FIGs. 5A-5B for instance. For example, the device or API monitor may annotate information, statistics, intelligence and/or analytics about the usage and/or performance of the service 275 on to the service graph. The device or API monitor may send the report or notification via any form or type of communication, e.g., a text message, an email, or an application notification, a voice message. In some embodiments, the device or API monitor provides or inserts the report or notification in a logfile (e.g., accessible by the consumer and/or the service provider), which may be stored in a storage device 608 or other location in the network 104.

The device or API monitor may perform an action in response to the application of the one or more policies, or the comparison against one or more thresholds. The device or API monitor may determine to request the service to take action (e.g., to improve a service level). The device or API monitor may determine to take an action to improve or change the service level of the service or an associated micro service. For example, the device or API monitor may change an allocation of network resources for using or accessing the service or micro service. The device or API monitor may, for instance throttle, responsive to the policy or threshold determination/comparison, one or more subsequent requests to one or more APIs of the plurality of APIs.

Various elements, which are described herein in the context of one or more embodiments, may be provided separately or in any suitable subcombination. For example, the processes described herein may be implemented in hardware, software, or a combination thereof. Further, the processes described herein are not limited to the specific embodiments described. For example, the processes described herein are not limited to the specific processing order described herein and, rather, process blocks may be re-ordered, combined, removed, or performed in parallel or in serial, as necessary, to achieve the results set forth herein.

It will be further understood that various changes in the details, materials, and arrangements of the parts that have been described and illustrated herein may be made by those skilled in the art without departing from the scope of the following claims.

## Claims

1. A method for monitoring service level compliance of an entity's use of application programming interfaces of a service, the method comprising:
(a) identifying, by a device, a service level definition for a service used by an entity, the service comprising a plurality of application programming interfaces (APIs), the service level definition comprising one or more thresholds regarding use by the entity of the plurality of APIs;
(b) receiving, by the device, from one or more devices of the entity a plurality of requests to access one or more APIs of the plurality of APIs of the service;
(c) recording, by the device, information about the entity's use of the plurality of APIs of the service;
(d) comparing, by the device, the recorded information about the entity's use of the plurality of APIs of the service to the one or more thresholds of the service level definition;
(e) determining, by the device, that the entity's use of the plurality of APIs is within a predetermined range of a threshold of the one or more thresholds of the service level definition; and
(f) providing, by the device, notification of the determination.

2. The method of claim 1, wherein (a) further comprises identifying the service level definition based on an identifier of the entity and an identifier of the service.

3. The method of claim 1, wherein (a) further comprises configuring, by the device, one or more policies based at least on the service level definition.

4. The method of claim 1, wherein (a) further comprises obtaining, by the device, the service level definition from a third party providing the service on a remote server.

5. The method of claim 1, wherein (f) further comprises throttling, by the device responsive to the determination, one or more subsequent requests to one or more APIs of the plurality of APIs.

6. A system for monitoring service level compliance of an entity's use of application programming interfaces of a service, the system comprising:
a device comprising one or more processors, coupled to memory and configured to identify a service level definition for a service used by an entity,
wherein the service comprises a plurality of application programming interfaces (APIs),
wherein the service level definition comprises one or more thresholds regarding use by the entity of the plurality of APIs;
wherein the device is configured to:
receive from one or more devices of the entity a plurality of requests to access one or more APIs of the plurality of APIs of the service;
record information about the entity's use of the plurality of APIs of the service;
compare the recorded information about the entity's use of the plurality of APIs of the service to the one or more thresholds of the service level definition;
determine that the entity's use of the plurality of APIs is within a predetermined range of a threshold of the one or more thresholds of the service level definition; and
provide a notification of the determination.

7. The system of claim 6, wherein the device is further configured to identify the service level definition based on an identifier of the entity and an identifier of the service.

8. The system of claim 6, wherein the device is further configured to configure one or more policies based at least on the service level definition.

9. The system of claim 6, wherein the device is further configured to obtain the service level definition from a third party providing the service on a remote server.

10. The method of claim 1 or the system of claim 6, wherein the service is hosted on a remote server of a third party.

11. The method of claim 1 or the system of claim 6, wherein the information recorded by the device comprises one or more of the following: a number of requests per time period, a number of requests that succeed per time period, a number of requests that fail per time period, a response time per request.

12. The method of claim 1 or the system of claim 6, wherein the predetermined range of the threshold comprises a percentage of the threshold.

13. The method of claim 1 or the system of claim 6, wherein the service comprises a plurality of micro services and one or more APIs of the plurality of APIs correspond to one of the plurality of micro services.

14. The method or the system of claim 13, where a threshold of the one or more thresholds corresponds to a micro service of the plurality of micro services.

15. The system of claim 6, wherein the device is further configured to throttle, responsive to the determination, one or more subsequent requests to one or more APIs of the plurality of APIs.
